# EUROPEAN PATENT SPECIFICATION

(11) **EP 3 329 814 B1**
(45) Date of publication and mention of the grant of the patent: **24.04.2019**
(21) Application number: 17205117.9
(22) Date of filing: 04.12.2017
(51) Int. Cl.: A47J 37/12

(54) **ELECTRIC FRYER**
ELEKTRISCHE FRITTEUSE
FRITEUSE ÉLECTRIQUE

(30) Priority: 02.12.2016 US 201615367689; 27.02.2017 US 201715444166; 22.09.2017 US 201715712229
(43) Date of publication of application: 06.06.2018
(73) Proprietor: Ningbo Biyi Electric Appliance Co., Ltd, Yuyao Zhejiang 315400 (CN); Team International Group of America, Inc., Miami Gardens, FL 33169 (US)
(72) Inventor: MAN, Kaimong, Yuyao, Zhejiang 315400 (CN); MURAD, Uri, Miami Gardens, FL 33169 (US)
(74) Representative: Aldridge, Christopher Simon

(56) References cited:
- CN-A- 105 640 363
- CN-U- 201 481 152
- US-A1- 2004 079 238

## Description

### FIELD OF THE INVENTION:

The invention is related to the "deep fat" frying of food. More specifically, the invention is related to appliances and methods for such frying. In particular, the invention provides an improved means for maintaining clean and fresh cooking oil or "fat" in such appliances.

### BACKGROUND:

Appliances for deep fat frying are common and well known. Such appliances typically include a tank for holding the oil in which the food is to be fried (the "fat"), means for heating that oil to a temperature sufficiently high to fry the food when the food is immersed therein, and a basket or other form of food holding device for manipulating the food, such as immersing it into the oil to fry and removing it from the oil when frying is completed.

A common problem with such appliances is that the oil supply contained therein will quickly become contaminated with bits of food during frying, will become foul tasting and malodorous by the combination of such bits of food remaining therein and by prolonged periods at high temperatures, and by remaining non-refrigerated in the appliance for long periods between uses and thereby spoiling. So there is a need for a fryer that allows for the cleansing and refrigerated storage of the oil between uses.

Another problem common to deep fryers is that the oil is often used to cook foods that may cause allergic reactions in some persons, such as fish. So when if the fryer allows for such storage and reuse, caution needs to be used to avoid such reuse for those persons. So there is a need a fryer that allows for the storage and reuse of distinct vessels of such used oils; such as allergic and non-allergic.

US Patents 6666131 and 7314001, co-invented and co-owned by SEB S.A., teach a deep fryer having a removable emptying vessel into which used oil may be drained by a control mechanism that activates a drain valve of the cooking vessel. However, the control mechanism for activating the drain valve is disadvantageously mounted on the emptying vessel and so, if more than one vessel is used, such as described above, the mechanism must be repeated for each vessel, causing unneeded expense and complication. Further, because the mechanism is the most delicate part of the vessel and is exposed on the vessel when it is removed from the fryer, it is prone to damage.

In its later T-Fal FR8000 fryer, SEB S.A. apparently attempts to rectify that deficiency by moving most of the control mechanism to the fryer, but leaves a critical portion of the mechanism in a precarious valve-actuating member that extends from and is part of the emptying vessel. Additionally, because the mechanism is shared by two major and separable components whose relative disposition is difficult to precisely control, the reliability of the valve actuation is compromised. It is found that the valve actuation mechanism does not properly operate unless the emptying vessel is carefully moved into "just the right position".

CN105640363 (Ningbo BIYI Electric Appliance Co Ltd) discloses an appliance for deep frying foodstuffs comprising a housing, a frying pot, an oil receiving tank and an actuation mechanism with three conditions that stays on the housing when the oil receiving tank is removed therefrom. The actuation mechanism has a rotor with a user-operable knob, a valve actuator portion with a link in the form of a spring-biased rocker and a blocking member that can prevent removal of the oil receiving tank. A filter is provided to remove particulate from the oil.

There is a need for a fryer that employs one or more emptying and storing vessels in which the cost, complexity, and vulnerability of the vessel is minimized, and such is an object of the present invention. There is the need for such a fryer in which the valve operating mechanism is solely contained within the fryer and not reliant on the precise positioning of the vessel, and such is an object of the present invention. There is the need for such a fryer in which, when used with multiple vessels, redundant components are minimized, and such is an object of the present invention. Further advantages and objects of the present invention exist, which will be appreciated upon review of the included disclosure.

### SUMMARY OF THE INVENTION:

The invention relates to an appliance for deep frying foodstuffs, as set out in accompanying claim 1, with preferred features set out in the sub-claims.

The deep fat frying appliance includes means for filtering contaminants from the oil after cooking and means for transferring that filtered oil into a storage device which may be removed from the appliance and refrigerated, to thereby keep the oil fresh and reusable for a longer time and for more frequent re-uses.

The appliance for deep frying foodstuffs has a housing with a frying pot disposed therein for containing cooking oil or fat and having a normally-closed draining valve disposed at a bottom thereof. An oil receiving tank may be removably receivable within the housing below the frying pot, may have an oil receiving hole positionable below the draining valve such that when the draining valve is opened, the cooking oil or fat may flow from the frying pot into the oil receiving tank.

The appliance has an actuation mechanism disposed entirely on the housing and having a first condition wherein the activation mechanism allows removal and replacement of the oil receiving tank relative to the housing, a second condition wherein the activation mechanism prevents removal and replacement of the oil receiving tank relative to the housing while not opening the draining valve, and a third condition wherein the activation mechanism prevents removal and replacement of the oil receiving tank relative to the housing while opening the draining valve.

The oil receiving tank includes a seal movable to either seal or unseal the oil receiving hole and engagable by the housing such that the oil receiving hole is sealed when the tank is removed from the housing and unsealed when the tank is received within the housing. The seal may be slidable co-directionally with the reception and removal of the oil receiving tank relative to the housing such that engagement of the seal with the housing causes the seal to slide between an unsealing and a sealing position.

The actuation mechanism includes a rotor having a user-operable knob portion and a valve actuator portion, wherein rotation of the knob portion between the second and third conditions causes the valve actuation portion to open and close the valve, respectively. The rotor may have a cam and the actuation mechanism may include a movable link, and rotation of the knob portion from the second condition to the third condition may cause the link to open the valve and rotation the knob portion from the third condition to the second condition may cause the link to close the valve. The link may be a spring-biased rocker pivotable in a "see-saw" motion by engagement with the cam such that as the cam forces a proximal end of the rocker downwardly, a distal end of the rocker moves upwardly to force open the valve.

The rotor includes a blocking member, and rotation of the rotor from the first condition to either of the second or third conditions may cause the blocking member to prevent removal and replacement of the oil receiving tank relative to the housing.

The appliance has a filter for removing particulate matter from the cooking oil or fat as the cooking oil or fat flows from the frying pot into the oil receiving tank. The fitter may be disposed within the frying pot. The draining valve may include the filter. The filter may be removable from the appliance for cleaning or replacement.

The invention may alternatively be embodied in or practiced using an appliance for deep frying foodstuffs with a housing, a frying pot disposed within the housing for containing cooking oil or fat and having a normally-closed draining valve disposed at a bottom thereof, and a heating control removably engagable with the housing.

The heating control may have a heating element disposed within the frying pot when the heating control engages the housing to heat the cooking oil or fat, and a control for selectively energizing the heating element.

An oil receiving tank is removably receivable within the housing below the frying pot, having an oil receiving hole positionable below the draining valve such that when the valve is opened, oil may flow from the frying pot into the oil receiving tank.

The appliance has an actuation mechanism disposed entirely on the housing and with a first condition wherein the activation mechanism allows removal and replacement of the oil receiving tank relative to the housing, a second condition wherein the activation mechanism prevents removal and replacement of the oil receiving tank relative to the housing while not opening the valve, and a third condition wherein the activation mechanism prevents removal and replacement of the oil receiving tank relative to the housing while opening the valve.

The oil receiving tank may include a seal movable co-directionally with the reception and removal of the oil receiving tank relative to the housing to either seal or unseal the oil receiving hole and engagable by the housing such that the oil receiving hole is sealed when the tank is removed from the housing and unsealed when the tank is received within the housing. The actuation mechanism may include a rotor having a user-operable knob portion and a valve actuator portion, and rotation of the rotor between the second and third conditions may cause the valve actuation portion to open and close the valve, respectively. The rotor may have a cam.

The actuation mechanism may include a spring-biased rocker, and rotation of the rotor from the second condition to the third condition may cause the cam to force a proximal end of the rocker downwardly, a may cause a distal end of the rocker to move upwardly to force open the valve. The rotor may also include a blocking member, and rotation of the rotor from the first condition to either of the second or third conditions may cause the blocking member to prevent removal and replacement of the oil receiving tank relative to the housing.

The draining valve may include a filter for removing particulate matter from the cooking oil or fat as the cooking oil or fat flows from the frying pot into the oil receiving tank.

Further features and aspects of the invention are disclosed with more specificity in the Detailed Description and Drawings provided herein and showing exemplary embodiments of the invention.

### BRIEF DESCRIPTION OF THE DRAWINGS:

An exemplary embodiment of a deep fat fryer in accordance with or useful in practicing the invention are shown in the accompanying Drawings, of which;
Figure 1 is an exploded view of a deep fat fryer;
Figure 2 is a perspective view of the fryer of Figure 1;
Figure 3 is a full side cross sectional view through the fryer of Figure 1;
Figure 4 is a partial perspective view of the fryer of Figure 1 with is oil storage tank being removed;
Figure 5 is an exploded partial perspective view of the oil storage tank of the fryer of Figure 1;
Figure 6A is a perspective view of the assembled oil storage tank of Figure 5 in its sealed configuration;
Figure 6B is a partial top view of the sealing mechanism of the oil storage tank of Figure 6A in its sealed configuration;
Figure 6C is a partial cross sectional view of the sealing mechanism of Figure 6B in its sealed configuration;
Figure 7A is a partial perspective view of the assembled oil storage tank of Figure 5 in its filtered oil receiving configuration;
Figure 7B is a partial top view of the sealing mechanism of the oil storage tank of Figure 7A in its filtered oil receiving configuration;
Figure 7C is a partial cross sectional view of the sealing mechanism of Figure 7B in its filtered oil receiving configuration;
Figure 8A is a partial cross sectional view through the seal activation system of the fryer of Figure 1 in its locked configuration;
Figure 8B is a partial cross sectional view through the seal activation system of the fryer of Figure 1 in its oil filtering configuration;
Figure 8C is a partial cross sectional view through the seal activation system of the fryer of Figure 1 in its unlocked configuration;
Figure 9A is a partial front view of the fryer of Figure 1 in its locked configuration;
Figure 9B is a partial front view of the fryer of Figure 1 in its oil filtering configuration;
Figure 9C is a partial front view of the fryer of Figure 1 in its unlocked configuration;
Figure 10 is a perspective view of the filter/valve assembly of the fryer of Figure 1;
Figure 11 is an exploded view of the filter/valve assembly of the fryer of Figure 1;
Figure 12 is a side view of the seal activating mechanism of the fryer of Figure 1;
Figure 13 is a perspective view of the seal activating mechanism of Figure 12;
Figure 14 is a cross-sectional of the sliding seal of the fryer of Figure 1 taken at Line 14-14 of Figure 7B; and
Figure 15 is a partial exploded internal view of the fryer of Figure 1.

### DETAILED DESCRIPTION OF EXEMPLARY EMBODIMENTS:

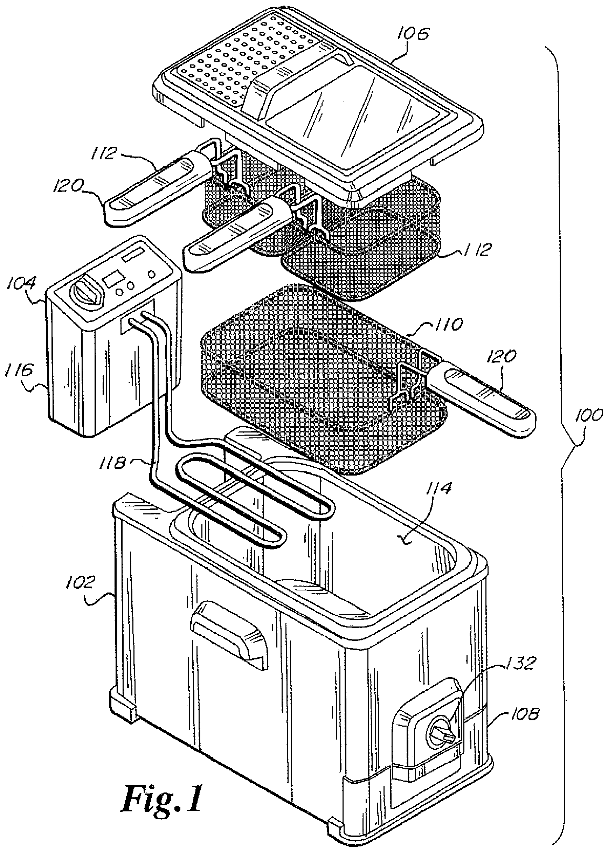

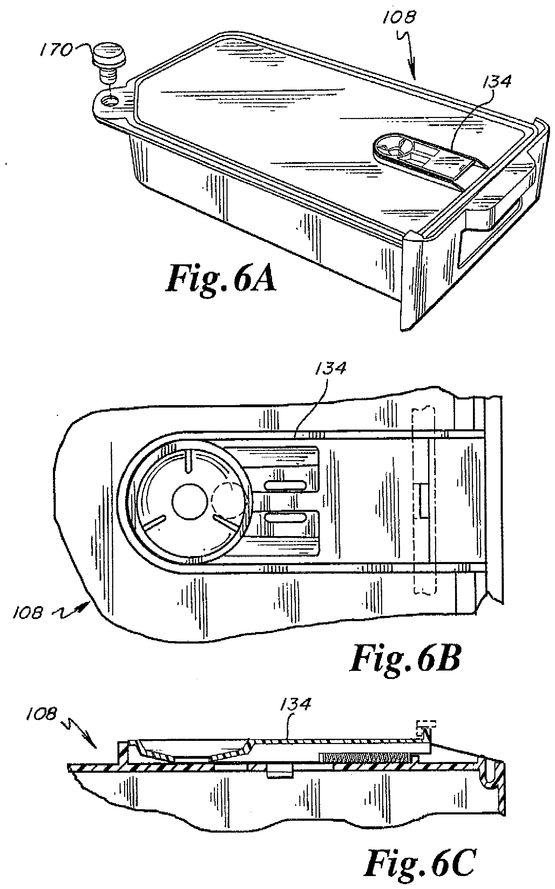

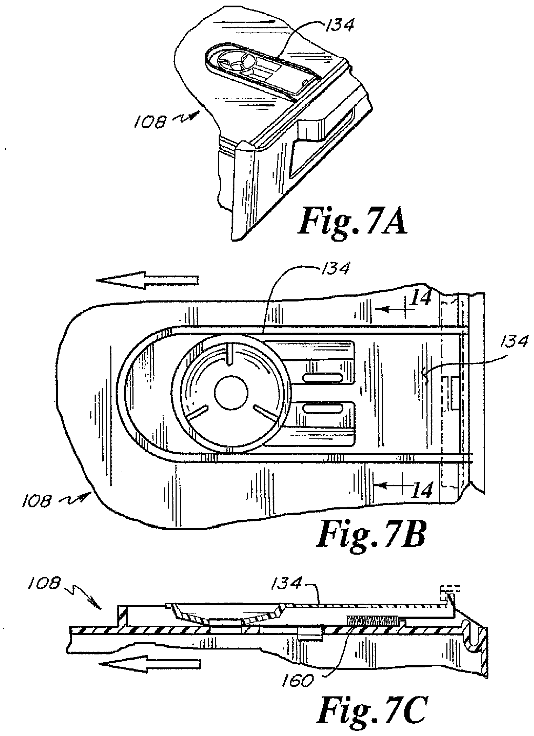

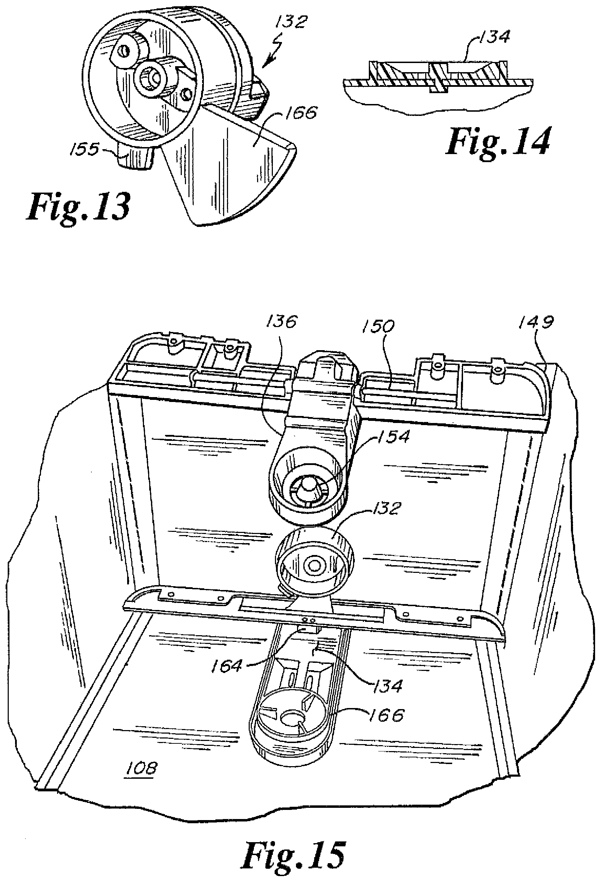

Referring to Figures 1 through 15, the invention may be embodied in or practiced using the depicted electrical deep frying appliance 100. The deep fryer includes a main housing 102, a heating control 104, a lid 106, a filtered oil tank 108, and food baskets. The food baskets include large basket 110 and two small baskets 112. The main housing includes a frying pot 114 that is intended to receive cooking oil. The heating control includes an electrical control box 116 and a tubular electric heating element 118. The control box includes a power cord (not shown) for connection to electrical power, and controls for programming and operating the heating element, cooking temperature, and timing.

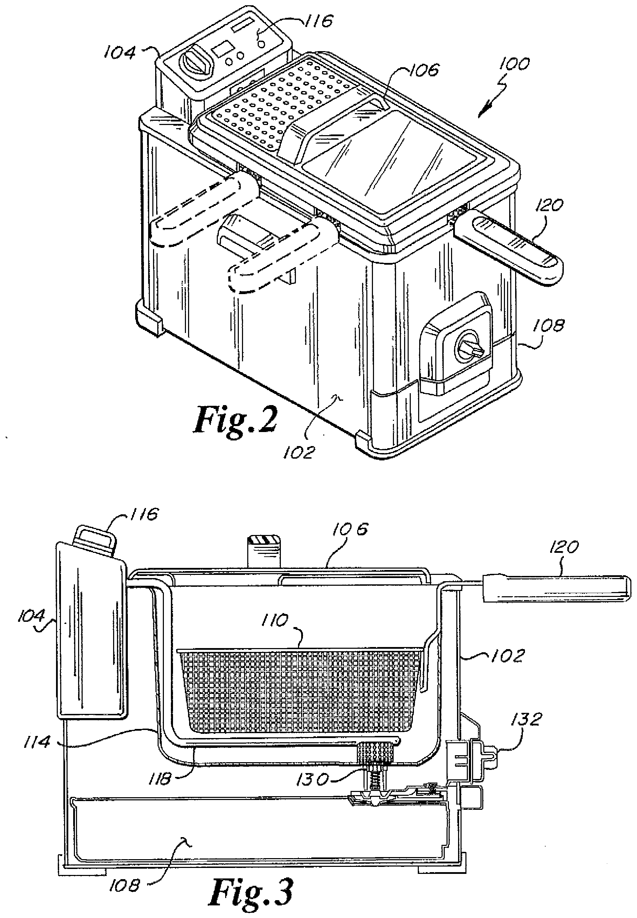

The lid and heating control are removable from the main housing to simplify cleaning of these components individually and for other advantageous reasons. With the lid removed and the heating control properly engaged into the main housing, the heating element is disposed near the bottom of the frying pot. Cooking oil may then be poured into the cooking pot to a level high within the pot, as shown in Figure 3. The heating element may then heat the cooking oil in the pot to a desired temperature according to the user's selection. A thermostatically-controlled display on the control box may indicate when the oil is at the proper frying temperature.

The large basket, or one or both of the small baskets may then be loaded with food to be fried and lowered into the pot such that the food is immersed below the top surface of the heated cooking oil and is fried there-within. Figure 2 shows the handles of small baskets in broken lines to demonstrate where they would be positioned when used.

The lid may or may not be replaced over the frying pot during frying. The basket's handle 120 rests on the upper perimeter of the housing to position and retain the food properly within the oil, and extends from the appliance for safety and convenience when manipulating the basket. A timer in the heating control may indicate, via the display, when the food has been sufficiently fried. The baskets are also configured to engage the housing in a position directly above the cooking pot, such as after frying is complete. The baskets are, of course, perforated to allow the oil to circulate through the basket and food during frying, and to allow the oil to drain from the basket back into the cooking pot when resting in the above position after frying. After the food has been served, the empty basket, lid, and heating control may be taken to the sink and washed.

The heating element is displaced from the bottom of the cooking pot during frying sufficiently to allow circulation of the oil as it is heated and to allow space for food crumbs and such to collect below as they inadvertently fall from frying food, so that they are not in contact with the heating element. Such contact will not only insulate the heating element from the oil, but will also promote burning and undesirable oil qualities. Cooking oil is relatively expensive, but may be re-used many times if not overheated, if kept clean, and if refrigerated between uses. But these crumbs and such are undesirable pollutants that can taint and otherwise shorten the life of the cooking oil. They impart bad flavors, colors, and odors into the oil, and they spoil much faster than the oil, even when refrigerated.

In typical prior art fryers, a user intent on saving the used oil for re-use would typically allow the oil to cool in the cooking post, then lift the appliance and pour the used oil through a funnel into a separate container for placement into a refrigerator. But of course, such pouring from a heavy appliance was prone to spillage and messy waste. The oil pouring from the appliance would initially be the clear oil at the top of the pot, but would eventually get cloudier and include more crumbs as it was poured. While the user might try to terminate the pouring as the crumbs begin to flow into the container, it was impossible to prevent the flow of some of the crumbs, and the crumbs remaining in the pot would include a significant amount of useful oil that would then be wasted.

To overcome this deficiency, the bottom of frying pot 114 is equipped with a novel filtering drain system that communicates directly and selectively with the removable filtered oil tank 108, as shown in Figures 3 thru 15.

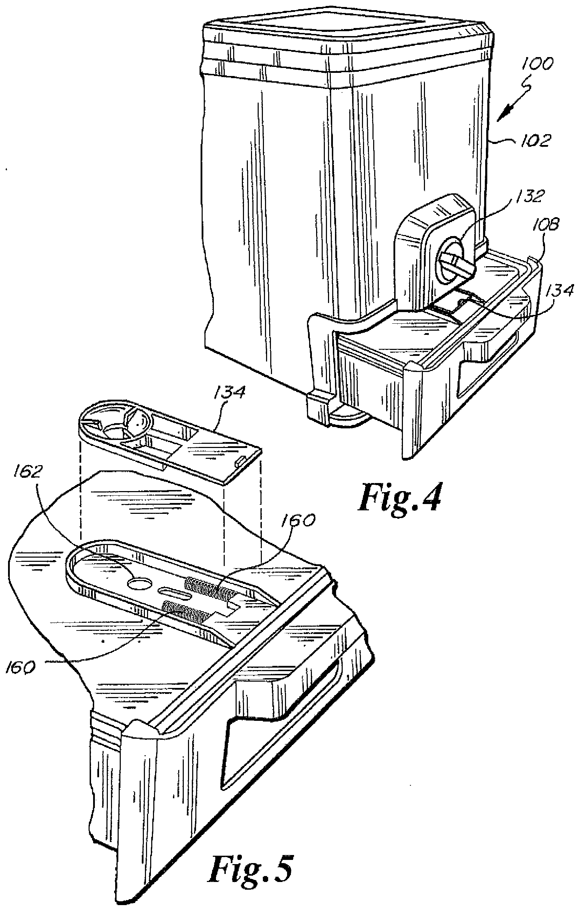

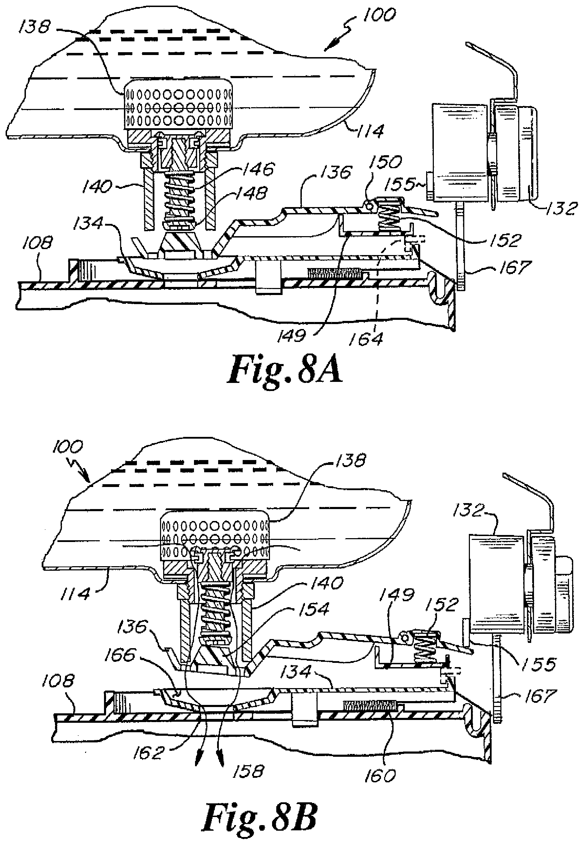

The operation of the filtering drain system is depicted in Figures 8A through 9C, and the related components are shown in Figures 5 through 7C and 10 through 15. The components of the system include filter/valve assembly 130, actuation rotor 132, sliding seal 134, and spring-biased rocker 136. The filter/valve assembly includes filtering cap 138 and normally-closed spring-biased valve 140. Actuation rotor 132 and spring-biased rocker 136 together form a valve actuation mechanism. The portion of the actuation rotor outside of housing is a knob portion for access by the user, and the portion within the housing is a valve actuation portion for engaging and controlling the filter/valve assembly and spring-biased valve.

The filter valve assembly is affixed through a drain hole in the bottom of the frying pot. Porous filtering cap 138 is removable for cleaning or replacement. As shown, this cap is made of perforated formed stainless steel sheet, but it might otherwise be made of formed screen or any equivalent construction, provided that the openings there-through are large enough to allow the passing of oil but small enough to prevent the passing of most food particles. It is found that openings of approximately 1.5 to 2 MM perform adequately. The valve is biased closed by compression spring 146 so that valve stem 148 is normally forced downwardly to seal the drain hole.

Rocker 136 is pivotally affixed to support 149 of the main housing at hinge pin 150 and biased by compression spring 152 so that its valve-actuating post 154 at the rocker's distal end is normally positioned down below and not in contact with the valve stem (When used herein, the term "proximal" shall be meant to mean towards a user positioned at the front of the appliance, and the term "distal" shall be meant to mean the opposite). This leaves valve 140 in its normally closed condition. The proximal end of the rocker is selectively engagable by cam 155 of the actuation rotor so that when the rotor is rotated the cam causes the rocker to pivot in a "see-saw" motion against the bias of spring 152, such that the valve-actuating post moves upward against the valve pin, forcing the valve open. Reverse rotation of the rotor allows spring 152 to force the rocker's valve actuating post back down, thereby allowing spring 146 to force the valve closed.

Sliding seal 134 is slidingly affixed to filtered oil tank 108 and normally biased by two compression springs 160 so that the sliding seal covers over and seals filtered oil hole 162 of the tank. When the tank is pushed into the main housing, the sliding seal engages tab 164 of support 149 to force the sliding seal towards the proximal end of the tank, thereby aligning the sliding seal's funnel 166 with the filtered oil hole as the filtered oil hole becomes aligned under valve 140. Pulling the tank back out of the housing, when allowed to do so by the position of the actuating rotor (as later explained) allows the sliding seal to move back towards the distal end of the tank, under the influence of springs 160, to cover over and re-seal the filtered oil hole.

Actuation rotor 132 serves two functions;
1) it locks filtered oil tank 108 into main housing 102 to prevent its removal except under the proper circumstances, and
2) it actuates rocker 136 to actuate valve 140 under the proper circumstances.

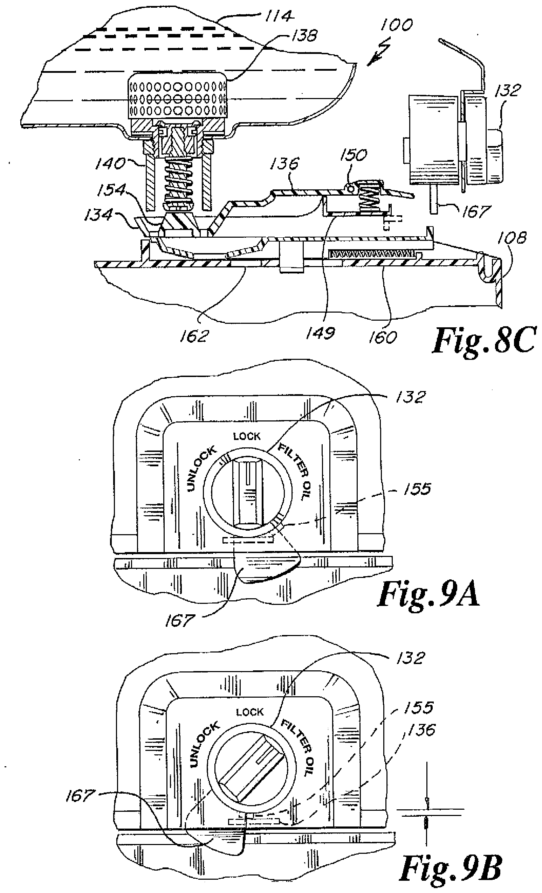

The filtered oil tank may be may slid into or from the housing when the actuation rotor is in its "Unlock" position, as demonstrated in Figures 4, 8C, and 9C. When the tank is properly positioned within the housing, as shown in Figures 2 and 3, the rotor may be rotted to its "Lock" position, as shown in Figures 8A and 9A, so that the rotor's blocking tab 167 rotates to block removal of the tank. In this "Lock" position the valve is not forced open by the rotor's cam 155 (best appreciated by viewing Figure 8A), so oil 168 is retained in frying pot 114 and heating control 104 may be operated to perform frying, as described above.

After frying is complete, actuation rotor 132 may be rotated to its "Filter Oil" position, whereby cam 155 engages the proximal end of rocker 136 to cause the opening of valve 140, as described above, to thereby allow the used "dirty" oil 158 to flow from pot 114, through filter cap 138 (whereby it is converted to "clean oil" suitable for re-use), through opened valve 140, through funnel 166 and filtered oil hole 162, and into filtered oil tank 108. Note that blocking tab 167 continues to prevent removal of the tank during the "Filter Oil" arrangement.

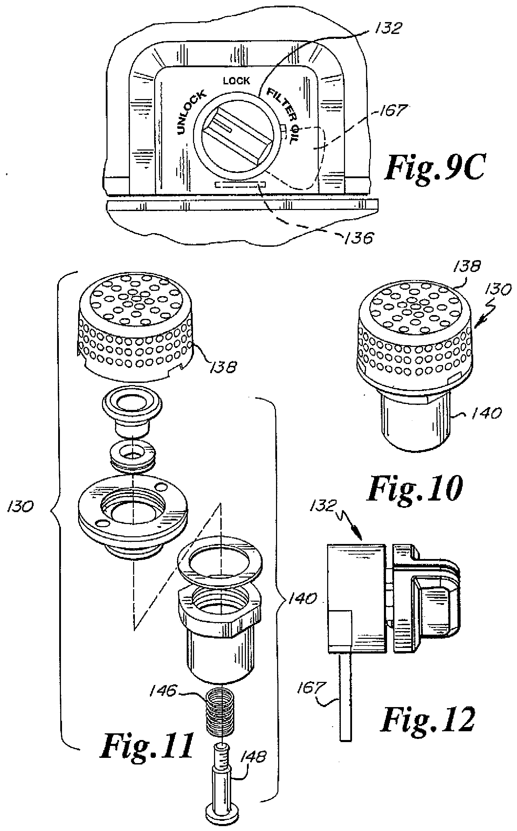

Actuation rotor 132 may then be rotated to its "Unlock" position, as shown in Figures 8C and 9C, whereby blocking tab 167 is no longer blocking removal of the tank, and valve 140 is allowed to re-close, and the filtered oil tank, now filled with filtered "clean" oil, may be removed from housing 102 and stored in a refrigerator.

The filtered oil tank is also equipped with means to neatly pour the filtered oil back into the frying pot prior to the next frying event. Plug 170 normally seals a pouring hole (not shown) in a distal corner of the tank. When the plug is removed, the tank may be positioned over the frying pot and, because the pouring hole is adjacent a corner of the tank, oil may be poured from the tank without spillage or the need for a funnel.

While the heating element shown is an immersible electrical heating tube, and the heating control is removable from the housing, other common means for controlling and heating may alternatively be employed without departing from the invention. For instance, the invention could be equivalently practiced in a frying appliance having a heating element disposed under the frying pot and above the filtered oil tank. Or the heating of the oil could be accomplished by a gas-burning flame under the frying pot and above the filtered oil tank. Additionally, the controls could be equivalently arranged as a permanently affixed portion of the housing without departing from the scope of the invention.

Further, the rocker operation could be flipped over and the valve configuration could be such that the valve is opened when the valve stem is pulled down rather than pushed up, and the rocker could engage the valve stem and be caused by the cam to pull the valve stem down when the rotor is turned to the "Filter Oil" position.

## Claims

1. An appliance (100) for deep frying foodstuffs and comprising:
a housing (102);
a flying pot (114) disposed within the housing (102) for containing cooking oil or fat and having a normally-closed draining valve (140) disposed at a bottom thereof;
an oil receiving tank (108) removably receivable within the housing (102) below the frying pot (114), having an oil receiving hole (162) positionable below the draining valve (140) such that when the draining valve (140) is opened, the cooking oil or fat may flow from the frying pot (114) into the oil receiving tank (108); and
an actuation mechanism having;
a first condition wherein the activation mechanism allows removal and replacement of the oil receiving tank (108) relative to the housing (102) with the draining valve (140) closed;
a second condition wherein the activation mechanism prevents removal and replacement of the oil receiving tank (108) relative to the housing (102) while not opening the draining valve (140); and
a third condition wherein the activation mechanism prevents removal and replacement of the oil receiving tank (108) relative to the housing (102) while opening the draining valve (140);
wherein the actuation mechanism comprises a rotor (132) having a user-operable knob portion and a valve actuator portion, and wherein rotation of the knob portion between the second and third conditions causes the valve actuation portion to open and close the valve (140), respectively;
wherein the rotor (132) comprises a cam (155) and the actuation mechanism further comprises a movable link (136), and wherein rotation of the knob portion from the second condition to the third condition causes the link (136) to open the valve (140) and rotation of the knob portion from the third condition to the second condition causes the link (136) to close the valve (140); wherein the link (136) is a spring-biased rocker pivotable in a see-saw motion by engagement with the cam (155) such that as the cam (155) forces a proximal end of the rocker downwardly, a distal end of the rocker moves upwardly to force open the valve (140);
wherein the rotor (132) further comprises a blocking member (167), and wherein rotation of the knob portion from the first condition to either of the second or third conditions causes the blocking member (167) to prevent removal and replacement of the oil receiving tank (108) relative to the housing (102); further comprising a filter (138) for removing particulate matter from the cooking oil or fat as the cooking oil or fat flows from the frying pot (114) into the oil receiving tank (108); and wherein the actuation mechanism is disposed entirely on the housing (102) such that it remains on the housing (102) when the oil receiving tank (108) is removed there-from,
wherein the oil receiving tank (108) comprises a seal (134) movable to either seal or unseal the oil receiving hole (162) and engagable by the housing (102) such that the oil receiving hole (162) is sealed when the tank (108) is removed from the housing (102) and unsealed when the tank (108) is received within the housing (102),
and **characterized in that,** the seal (134) is slidable co-directionally with the receipt and removal of the oil receiving tank (108) relative to the housing (102) such that engagement of the seal (134) with the housing (102) causes the seal to slide between an unsealing and a sealing position.

2. The appliance (100) of claim 1 wherein the filter (138) is disposed within the frying pot (114).

3. The appliance (100) of claim 1 or claim 2, wherein draining valve (140) comprises the filter.

4. The appliance (100) of any preceding claim wherein the filter (138) is removable from the appliance (100) for cleaning or replacement.

5. An appliance (100) for deep frying foodstuffs according to any preceding claim, wherein the appliance further comprises a heating control (104) removably engagable with the housing (102) and comprising;
a heating element (118) disposed within the frying pot (114) when the heating control (104) engages the housing (102) to heat the cooking oil or fat; and
a control for selectively energizing the heating element (118).

## Patentansprüche

1. Vorrichtung (100) zum Frittieren von Lebensmitteln, die Folgendes umfasst: ein Gehäuse (102);
einen Frittiertopf (114), der in dem Gehäuse (102) angeordnet ist, um Kochöl oder -fett zu enthalten und ein normalerweise geschlossenes Ableitungsventil (140) aufzuweisen, das an einem Boden davon angeordnet ist;
einen Ölaufnahmebehälter (108), der lösbar in dem Gehäuse (102) unter dem Frittiertopf (114) aufgenommen werden kann und eine Ölaufnahmeöffnung (162) aufweist, die unter dem Ableitungsventil (140) positioniert werden kann, sodass das Kochöl oder -fett aus dem Frittiertopf (114) in den Ölaufnahmebehälter (108) strömen kann, wenn das Ableitungsventil (140) geöffnet wird; und einen Betätigungsmechanismus, der Folgendes aufweist:
einen ersten Zustand, bei dem der Aktivierungsmechanismus ein Entfernen und Austauschen des Ölaufnahmebehälters (108) bezogen auf das Gehäuse (102) ermöglicht, wobei das Ableitungsventil (140) geschlossen ist;
einen zweiten Zustand, bei dem der Aktivierungsmechanismus ein Entfernen und Austauschen des Ölaufnahmebehälters (108) bezogen auf das Gehäuse (102) verhindert, während das Ableitungsventil (140) nicht geöffnet wird; und
einen dritten Zustand, bei dem der Aktivierungsmechanismus ein Entfernen und Austauschen des Ölaufnahmebehälters (108) bezogen auf das Gehäuse (102) verhindert, während das Ableitungsventil (140) geöffnet wird;
wobei der Betätigungsmechanismus einen Rotor (132) umfasst, der einen benutzerbedienbaren Knopfabschnitt und einen Ventilaktorabschnitt aufweist, und wobei eine Drehung des Knopfabschnitts zwischen dem zweiten und dritten Zustand den Ventilbetätigungsabschnitt jeweils dazu veranlasst, das Ventil (140) zu öffnen und zu schließen;
wobei der Rotor (132) eine Nocke (155) umfasst und der Betätigungsmechanismus ferner eine bewegliche Verbindung (136) umfasst und wobei eine Drehung des Knopfabschnitts aus dem zweiten Zustand in den dritten Zustand die Verbindung (136) dazu veranlasst, das Ventil (140) zu öffnen, und eine Drehung des Knopfabschnitts aus dem dritten Zustand in den zweiten Zustand die Verbindung (136) dazu veranlasst, das Ventil (140) zu schließen; wobei die Verbindung (136) eine federvorgespannte Wippe ist, die durch Eingriff in die Nocke (155) in einer Wippbewegung geschwenkt werden kann, sodass sich ein distales Ende der Wippe nach oben bewegt, um das Ventil (140) aufzudrücken, wenn die Nocke (155) ein proximales Ende der Wippe nach unten drückt; wobei der Rotor (132) ferner ein Sperrelement (167) umfasst; und wobei eine Drehung des Knopfabschnitts aus dem ersten Zustand entweder in den zweiten oder dritten Zustand das Sperrelement (167) dazu veranlasst, ein Entfernen und Austauschen des Ölaufnahmebehälters (108) bezogen auf das Gehäuse (102) zu verhindern;
ferner umfassend einen Filter (138) zum Entfernung von Teilchenmaterial aus dem Kochöl oder -fett, wenn das Kochöl aus dem Frittiertopf (114) in den Ölaufnahmebehälter (108) strömt; und wobei der Betätigungsmechanismus vollständig auf dem Gehäuse (102) angeordnet ist, sodass dieser auf dem Gehäuse (102) bleibt, wenn der Ölaufnahmebehälter (108) davon entfernt wird;
wobei der Ölaufnahmebehälter (108) eine Dichtung (134) umfasst, die bewegt werden kann, um die Ölaufnahmeöffnung (162) entweder zu versiegeln oder zu entsiegeln, und durch das Gehäuse (102) in Eingriff genommen werden kann, sodass die Ölaufnahmeöffnung (162) versiegelt ist, wenn der Behälter (108) von dem Gehäuse (102) entfernt ist, und entsiegelt ist, wenn der Behälter (108) in dem Gehäuse (102) aufgenommen ist;
und **dadurch gekennzeichnet, dass** die Dichtung (134) in der gleichen Richtung wie die Aufnahme und Entfernung des Ölaufnahmebehälters (108) bezogen auf das Gehäuse (102) verschoben werden kann, sodass ein Eingriff der Dichtung (134) in das Gehäuse (102) die Dichtung dazu veranlasst, zwischen einer Entsiegelungs- und einer Versiegelungsposition zu gleiten.

2. Vorrichtung (100) nach Anspruch 1, wobei der Filter (138) in dem Frittiertopf (114) angeordnet ist.

3. Vorrichtung (100) nach Anspruch 1 oder Anspruch 2, wobei das Ableitungsventil (140) den Filter umfasst.

4. Vorrichtung (100) nach einem der vorangehenden Ansprüche, wobei der Filter (138) zum Reinigen oder Austauschen von der Vorrichtung (100) entfernt werden kann.

5. Vorrichtung (100) zum Frittieren von Lebensmitteln nach einem der vorangehenden Ansprüche, wobei die Vorrichtung ferner eine Heizsteuerung (104) umfasst, die lösbar mit dem Gehäuse (102) in Eingriff gebracht werden kann und Folgendes umfasst:
ein Heizelement (118), das in dem Frittiertopf (114) angeordnet ist, wenn die Heizsteuerung (104) in das Gehäuse (102) eingreift, um das Kochöl oder -fett zu erhitzen; und
eine Steuerung zum selektiven Aktivieren des Heizelements (118).

## Revendications

1. Appareil (100) destiné à frire des aliments et comprenant ;
un boîtier (102) ;
une cuve de friture (114) disposée dans le boîtier (102) destinée à contenir une huile ou graisse de cuisson et possédant une vanne de purge normalement fermée (140) disposée au fond de celle-ci ;
un réservoir de réception d'huile (108) pouvant être reçu de manière amovible dans le boîtier (102) sous la cuve de friture (114), comportant un trou de réception d'huile (162) positionnable sous la vanne de purge (140) de manière à ce que quand la vanne de purge (140) est ouverte, l'huile ou la graisse de cuisson puisse s'écouler depuis la cuve de friture (114) dans le réservoir de réception d'huile (108) ;
et un mécanisme d'actionnement ayant ;
une première condition dans laquelle le mécanisme d'actionnement permet le retrait et la remise en place du réservoir de réception d'huile (108) par rapport au boîtier (102) avec la vanne de purge (140) fermée ;
une deuxième condition dans laquelle le mécanisme d'actionnement empêche le retrait et la remise en place du réservoir de réception d'huile (108) par rapport au boîtier (102) tout en n'ouvrant pas la vanne de purge (140) ; et
une troisième condition dans laquelle le mécanisme d'actionnement empêche le retrait et la remise en place du réservoir de réception d'huile (108) par rapport au boîtier (102) tout en ouvrant la vanne de purge (140) ;
dans lequel le mécanisme d'actionnement comprend un rotor (132) ayant une partie de molette actionnable par l'utilisateur et une partie d'actionnement de la vanne, et dans lequel la rotation de la partie de molette entre les deuxième et troisième conditions amène la partie d'actionnement de la vanne à ouvrir et fermer la vanne (140), respectivement ;
dans lequel le rotor (132) comprend une came (155) et le mécanisme d'actionnement comprend en outre une liaison mobile (136), et dans lequel la rotation de la partie de molette depuis la deuxième condition vers la troisième condition amène la liaison (136) à ouvrir la vanne (140) et la rotation de la partie de molette depuis la troisième condition vers la deuxième condition amène la liaison (136) à fermer la vanne (140) ; dans lequel la liaison (136) est une bascule à ressort pivotable en un mouvement de va-et-vient par engagement avec la came (155) de sorte que quand la came (155) force une extrémité proximale de la bascule vers le bas, une extrémité distale de la bascule se déplace vers le haut pour forcer l'ouverture de la vanne (140) ; dans lequel le rotor (132) comprend en outre un élément de blocage (167), et dans lequel la rotation de la partie de molette depuis la première condition vers l'une ou l'autre de la deuxième ou la troisième condition amène l'élément de blocage (167) à empêcher le retrait et la remise en place du réservoir de réception d'huile (108) par rapport au boîtier (102) ; comprenant en outre un filtre (138) destiné à retirer des matières particulaires de l'huile ou la graisse de cuisson tandis que l'huile ou la graisse de cuisson s'écoule depuis la cuve de friture (114) dans le réservoir de réception d'huile (108) ; et dans lequel le mécanisme d'actionnement est disposé entièrement sur le boîtier (102) de sorte qu'il reste sur le boîtier (102) quand le réservoir de réception d'huile (108) est retiré de celui-ci,
dans lequel le réservoir de réception d'huile (108) comprend un dispositif d'étanchéité (134) mobile pour soit sceller soit ne pas sceller le trou de réception d'huile (162) et pouvant être engagé par le boîtier (102) de manière à ce que le trou de réception d'huile (162) soit scellé quand le réservoir (108) est retiré du boîtier (102) et non-scellé quand le réservoir (108) est reçu dans le boîtier (102),
et **caractérisé en ce que,** le dispositif d'étanchéité (134) est coulissable de manière co-directionelle avec la réception et le retrait du réservoir de réception d'huile (108) par rapport au boîtier (102) de manière à ce que l'engagement du dispositif d'étanchéité (134) avec le boîtier (102) amène le dispositif d'étanchéité à glisser entre une position de scellage et de non-scellage.

2. Appareil (100) selon la revendication 1, dans lequel le filtre (138) est disposé à l'intérieur de la cuve de friture (114).

3. Appareil (100) selon la revendication 1 ou 2, dans lequel la vanne de purge (140) comprend le filtre.

4. Appareil (100) selon l'une quelconque des revendications précédentes, dans lequel le filtre (138) est retirable de l'appareil (100) à des fins de nettoyage ou remplacement.

5. Appareil (100) destiné à frire des aliments selon l'une quelconque des revendications précédentes, dans lequel l'appareil comprend en outre une commande de chauffe (104) engageable de manière amovible avec le boîtier (102) et comprenant ;
un élément de chauffe (118) disposé à l'intérieur de la cuve de friture (114) quand la commande de chauffe (104) engage le boîtier (102) pour chauffer l'huile ou la graisse de cuisson ; et
une commande destinée à alimenter de manière sélective l'élément de chauffe (118).
